Europäisches Patentamt

European Patent Office

Office européen des brevets

(11) Publication number: **0 251 416**
**A1**

## (12) EUROPEAN PATENT APPLICATION

(21) Application number: 87201245.5

(22) Date of filing: 29.06.87

(51) Int. Cl.³: **B 21 D 22/12**
**G 05 D 16/20**

(30) Priority: 27.06.86 NL 8601696

(43) Date of publication of application:
07.01.88 Bulletin 88/1

(84) Designated Contracting States:
DE GB IT NL SE

(71) Applicant: Goedkoop, Mark Jacob
Nijverheidsweg Noord 60
NL-3812 PM Amersfoort(NL)

(72) Inventor: Goedkoop, Mark Jacob
Nijverheidsweg Noord 60
NL-3812 PM Amersfoort(NL)

(74) Representative: van der Beek, George Frans et al,
Nederlandsch Octrooibureau Johan de Wittlaan 15 P.O.
Box 29720
NL-2502 LS 's-Gravenhage(NL)

(54) Deep-forming press.

(57) A deep-forming press which is provided with a fixed die (2) and a flexible plunger, consisting of a rubber plate (4), the blank to be deformed being placed between fixed die (2) and rubber plate (5), a press cylinder (6) against the rubber plate (4) with a central channel (7) through which fluid can be admitted with regulated pressure under the rubber plate (4), and a hydraulic fluid circuit. In a first phase the rubber (9) is compressed by the press cylinder (6) and the blank (3) is forced through inward-directed friction forces into the die cavity, and in a second phase the blank (3) is deformed by the plunger fluid pressure to the details of the die cavity. For accurate regulation over the entire pressure range an electronic control circuit is provided for the hydraulic circuit, in which a pressure transducer is fitted in the fluid conduit to the press cylinder, and a pressure transducer and a flow regulation valve are fitted in the fluid conduit to the plunger, the electrical excitation of which is a function of the press cylinder pressure.

EP 0 251 416 A1

## Deep-forming press

The invention relates to a deep-forming press, provided with a fixed die and a flexible plunger, consisting of a rubber plate, the blank to be deformed being placed between fixed die and rubber plate, a press cylinder against the rubber plate with a central channel through which fluid can be admitted with regulated pressure under the rubber plate, and a hydraulic fluid circuit, where in a first phase the rubber is compressed by the press cylinder and the blank is forced through inward-directed friction forces into the die cavity, and in a second phase the blank is deformed by the plunger fluid pressure to the details of the die cavity. Such a deep-forming press is known in practice.

In general, three components are used in a traditional deep-drawing die: a fixed die for the shape of the outside of the product to be formed, a plunger which presses the sheet or blank to be deformed into the die and thereby determines the shape of the inside of the product to be moulded, and a blank holder which holds the edges of the blank to prevent them from wrinkling. Such traditional deep-drawing dies are very expensive, since the fixed die and blank holder have to be very accurately matched to ensure that the shaped product fits precisely between these parts. Another complication is that the sheet thickness does not always remain constant after the deformation. Hence, in the art, flexible die parts or plungers which adapt by themselves and need not therefore be made to measure were developed. However, another remaining problem is that a high pressure force, and thus expensive presses are needed for this.

The deep-forming press mentioned in the preamble also uses a flexible plunger, for which relatively great pressure forces are also required. Since, however, a detachable rubber plate is used for this flexible plunger, and since there is only one moving part which moves over a short distance (1 to 2 cm), a very compact and cheap press is obtained. During the pressing process the moulding pressure on the rubber plate is promoted in a first phase by friction forces directed towards the centre forcing the rubber inwards, so that it flows inwards. This causes the blank to be pressed into the die cavity. Moreover, the rubber plate or plunger prevents "secondary" wrinkling from occurring, for example in the case of non-circular symmetrical or cone shapes. In a second phase of the pressing process the fluid or oil admitted under the plunger forces the blank under regulated pressure completely into the details of the die cavity, so that it assumes entirely the desired shape.

Through the use of the flexible plunger, a great variety of shapes can be made, while the advantage is obtained that the blank in the course of this deep-forming is subjected to much less tensile stress than in deep-drawing, which means that little or no thinning occurs in the blank sheet. This means that materials such as structural steel and plastic, which are not readily deep-drawable, can also be processed. Besides, the press cylinder only needs to make a short stroke, namely 10 to 20 mm, which is sufficient to press the rubber plate together; and only one fixed die part is needed. The flexible rubber plate fulfils both the function of plunger and that of blank holder.

Of great importance in the above-mentioned deep-forming press is the combination of inward-directed friction forces in the rubber plate with the plunger force transverse to this rubber plate.

In the above-mentioned deep-forming press it is vitally important that the plunger fluid pressure can be regulated very accurately (1 - 2%) over the entire pressure range. In the usual commercially available pressure regulation valves this is apparently not really possible; in the lower pressure range in particular, these valves do not work well, for such valves work with a forces balance. At low pressures the forces on the valve slide are very low at both sides, with the result that friction forces and mass inertia forces form a great source of errors. Another problem with the above-mentioned deep-forming press is that it is not possible with the usual hydraulic circuits to exert the plunger fluid pressure according to a particular pressure diagram. It is also important for the fluid pressure in the press cylinder and the fluid pressure for the plunger to be accurately matched.

The object of the invention is to eliminate the above-mentioned problems and produce a deep-forming press which has a very compact and cheap design, and by means of which the costs of small-series production of products are considerably reduced. This is achieved according to the invention in a deep-forming press of the type referred to in the preamble, in that for accurate regulation over the entire pressure range an electronic control circuit is provided for the hydraulic circuit, in which a pressure transducer is fitted in the fluid conduit to the press cylinder, and a pressure transducer and a flow regulation valve are fitted in the fluid conduit to the plunger, the electrical excitation of which is a function of the press cylinder pressure. In this design the whole pressure range is regulated in an exceptionally accurate manner, partly due to the fact that the plunger behaves almost like a hydraulic integrator.

The above-mentioned deep-forming press, in which the hydraulic circuit is provided with a pump, has a further

4

advantageous embodiment in that the electronic control circuit is designed with a limit setting element in such a way that the plunger fluid pressure produced by the flow regulation valve is always lower than the pressure on the rubber plate, which means that during the pressing cycle a safe seal for the plunger fluid is ensured, and in that a venturi pump driven by the circulated fluid is provided in the hydraulic circuit, so that after the completion of the pressing cycle under the control of the electronic control circuit the plunger fluid is first sucked back, and then the pressure is removed. Since during the pressing cycle the pressure in the rubber at the edge of the rubber plate is always higher than the plunger fluid pressure, this means that the seal of the plunger fluid is always ensured. Consequently, the rubber plate can also be flat at the edges, in other words, it is cheap to produce. Nor does said plate need to be clamped or glued at the edges, with the problems occurring as a result thereof. For the plate moves inwards during the deformation and becomes thinner. Great concentrations of stresses would then occur at the clamping or adhesive join points.

The above-mentioned design with detachable rubber plate means that the latter is easy to replace. This rubber plate is also easy to stamp out of a flat sheet. In order to prevent plunger fluid from escaping on completion of the pressing cycle, the plunger fluid is first sucked back and the cylinder pressure is then released. Thus, when no pressing is taking place, there is under pressure in the plunger fluid, causing the rubber plate to be sucked flat.

As indicated, the plunger fluid must be sucked back quickly on completion of the pressing cycle. It is, however, easily possible for not only fluid or oil, but also air to be sucked along too. Through the fact that according to the invention now a venturi pump is used, i.e. a pump driven by a fluid jet, the working thereof is not affected by air bubbles. The advantage is also obtained that the capacity of the pump varies greatly with the supply or pressure difference, which is necessary, and that the fluid or oil stream required for the drive is still available. Such a pump is small, very reliable and relatively cheap.

Another embodiment according to the invention is characterized in that the press cylinder is provided on its pressing face with a cavity in order to take some of the rubber flowing away. This provides additional buffer space for the inward-flowing rubber, which can flow into this cavity and into the protuberance of the blank. This cavity is desirable in particular during the deep-forming of relatively small products. In the case of larger products there is sufficient space through the bulging of the blank in the die cavity.

The invention will be explained in greater detail with reference to an example of an embodiment shown in the drawings, in which the same components in the different figures are indicated by the same reference numbers, and in which:

Fig. 1 shows a cross-sectional view of the deep-forming press mentioned in the preamble;

Figs. 2a to 2d show a sketch of successive phases in the pressing process;

Fig. 3 shows a cross-sectional view of the deep-forming press, with a cavity in the pressure face of the press cylinder under the rubber plate;

Fig. 4 shows a diagram of the hydraulic circuit; and

Fig. 5 shows a diagram of the electronic control circuit.

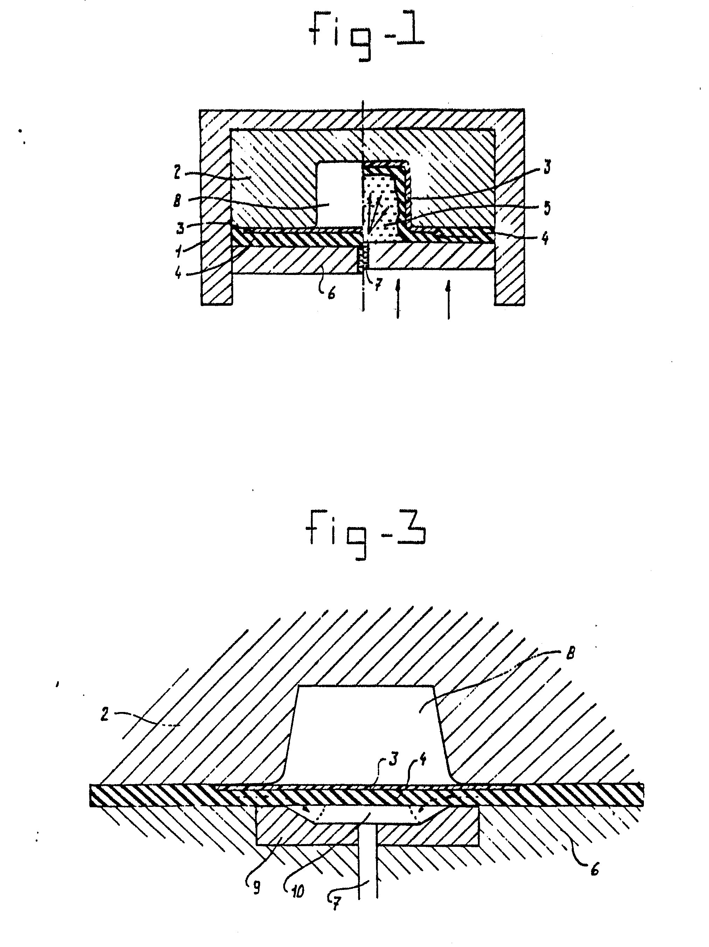

In the cross-sectional view of the deep-forming press from the preamble shown in Fig. 1 the pressure holder is indicated by 1, the fixed die by 2, the blank or sheet material to be deformed by 3, the rubber plate or diaphragm by 4, the plunger fluid or oil by 5, and the moving pressure face or bottom part of the press cylinder by 6, the central channel therein for infeed of the plunger fluid by 7, and the die cavity by 8. In this deep-forming press the rubber plate or diaphragm is first pressed, causing the edges to flow inwards as a result of the inward-directed friction forces, and taking the blank material inwards with them. During this pressing the pressure on the plunger fluid is increased and the material is deformed right to the bottom of the die cavity. In a second phase of the deformation this pressure is increased to its maximum, so that the blank entirely takes over the details of the die cavity.

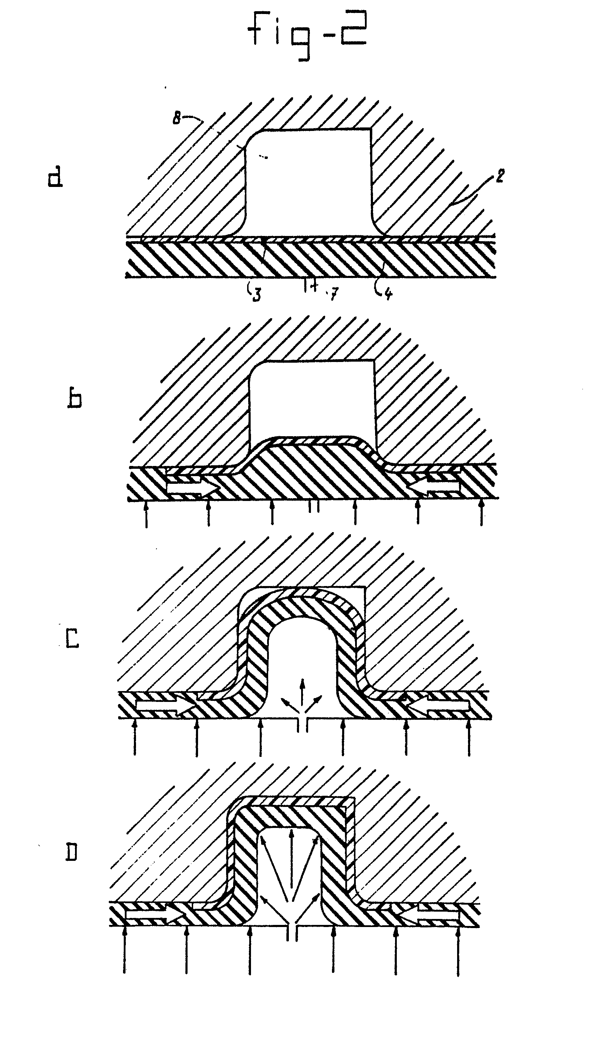

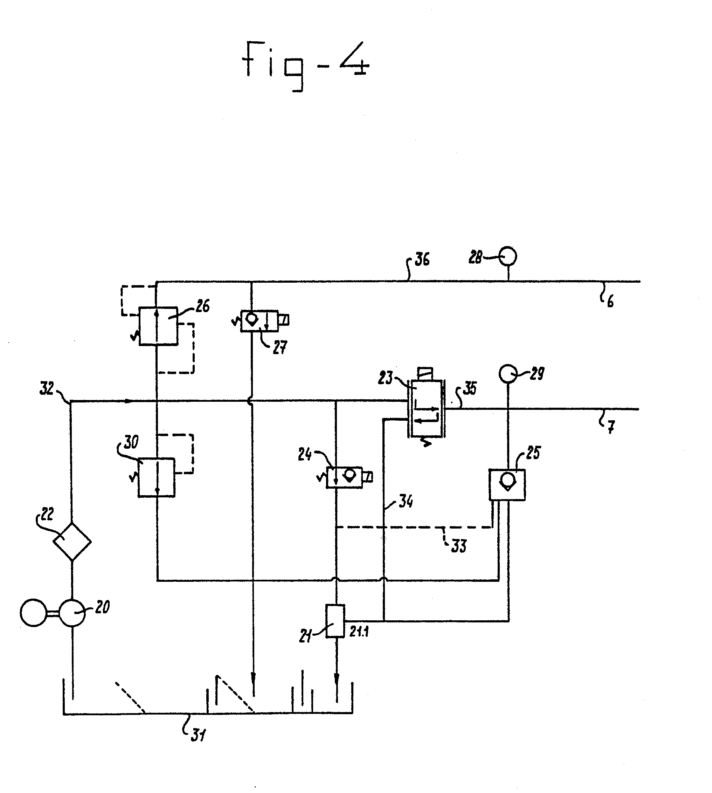

Figs. 2a to 2d show this in greater detail. Fig. 2a shows the starting situation with the blank 3 between the rubber plate 4 and the fixed die 2. It can be seen from Fig. 2b that, through the pressure force and the friction forces thereby occurring, the rubber is compressed, is forced inwards, and can flow away only into the die cavity 8 and/or into a cavity 10 ( fig.3 )hollowed out in the (press cylinder) bottom 6. The blank edges are hereby also taken inwards through the friction forces, and said blank bulges out in the middle. In Fig. 2c the deformation of the blank is continued, due to the inward-directed friction forces, until the blank reaches the bottom of the die cavity. This can be assisted by pumping the fluid or oil 7 under the rubber plate 4. Fig. 2d shows how, through increasing the plunger fluid pressure, the deformation of the blank 3 is taken further and takes on the complete shape of the die cavity.

As already stated, a combination of inward-directed friction forces along the edges and plunger forces transverse to the rubber plate occurs here.

Fig. 3 shows a cross section with a removable part 9 having a cavity 10 in the pressure face of the press cylinder. This cavity is used to collect a small part of the rubber flowing away, while the remainder is forced into the die cavity 8, as already mentioned. This cavity 10 can be used, for example, for the deep-drawing of relatively small products. With larger products sufficient space is obtained for the blank in the die cavity 8.

Fig. 4 shows the diagram of the hydraulic circuit according to the invention. In this diagram 20 and 21 indicate an electrically driven pump and a hydraulically driven (suction) venturi pump respectively, 22 is a filter, 23 is the already mentioned flow regulating valve for regulation of the pressure of the plunger fluid in the channel 7 of the press cylinder, 26 is a pressure reduction valve for the fluid pressure to the press cylinder 6, 27 is a valve, 28 a pressure transducer, 29 a pressure transducer, 25 is a pressure-controlled non-return valve, 24 is a valve, 30 is a pressure relief valve, and 31 is a tank.

Fig. 5a gives the diagram of the electronic control circuit for the control of the hydraulic circuit according to the invention. In this figure, 40, 41, 42, 43, 44, 45, 46, 47 indicate different potentiometers. Indicated by 29, 28, 50, 51, 62, 63, 64 and 61 are the signals from the pressure transducer 29, from the pressure transducer 28, from the actual piston position, from the two clamps holding the pressure halves of the deep-forming press fixed on each other, from the stop element, from the emergency stop element, from the pump ON/OFF switch, and from the starting button. A sixty-second timer is indicated by 52, and a two-second timer by 53. A number of amplifiers are indicated by 54, 55, 56, 57, 58, 59, 65 and 60.

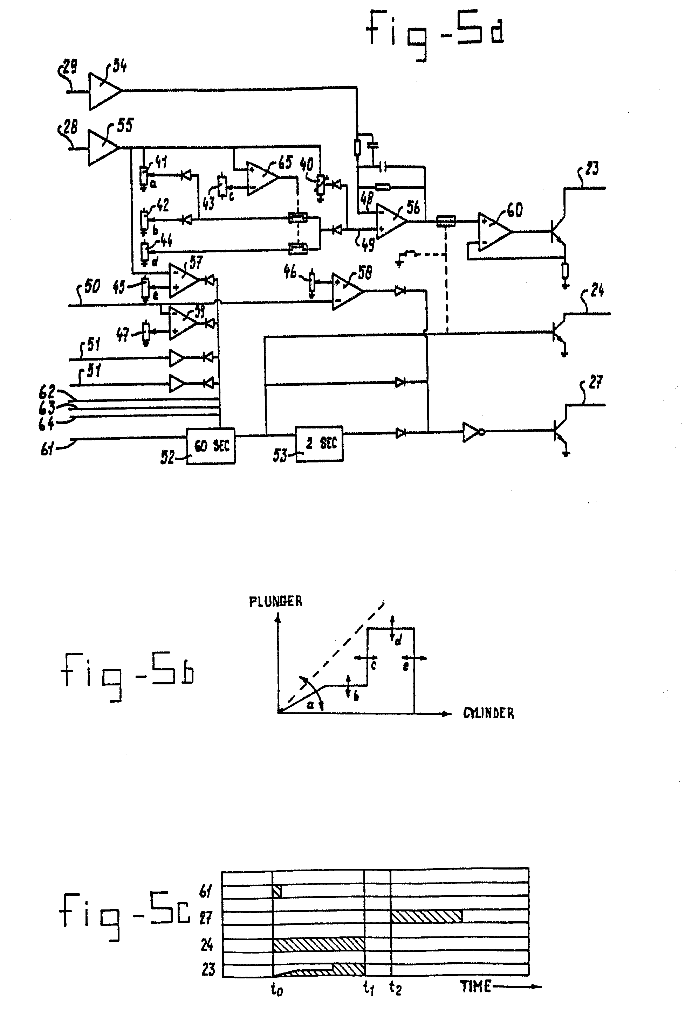

Figs. 5b and Fig. 5c show the pressure diagram of plunger fluid pressure versus press cylinder pressure sure and the time diagram of the actions of the starting button 61 and the valves 27, 24 and 23 respectively for a pressing cycle.

As stated earlier, the regulation of the plunger fluid pressure must be capable of being controlled very accurately (1-2%) over the entire pressure range of, for example, 0-350 bar. With ordinary pressure control valves this is not possible, since in the lower pressure ranges they do not function well. In the embodiment according to the invention, pressure control has therefore been replaced by volume control by means of a flow regulation valve, which is known in practice. Here the plunger fluid pressure is measured with a pressure transducer and converted into an electrical signal. This measured value is compared in the electronic control circuit with a desired value. As a result of the comparison, a control signal is fed to the flow regulation valve. One therefore has an electronic instead of a hydraulic/mechanical feedback circuit, as with a pressure regulation valve.

The electronic control circuit is advantageously designed as a PID control circuit. The pressure cycle of the deep-forming press can be regulated with such a control circuit according to the pressure diagram shown in Fig. 5b for the setting of the plunger fluid pressure and the time diagram shown in Fig. 5c.

The functioning with reference to Figs. 4 and 5 is as follows. At rest, when the pump 20 is running, the fluid or oil flows via the open valve 24 and the venturi 21 back to the tank 31. In the process, an underpresure is produced on the suction side 21.1. of the venturi 21 and ensures that the plunger oil is sucked back through the non-return valve 25 from conduit 35 leading to the plunger 7.

The valve 25 stays open so long as a pressure of five bars or more is on the control conduit 33 shown by the dotted line. This condition is met, since the drop in pressure over the venturi 21 is about nine bars. The pressure reduction valve 26 between the main supply conduit 32 and the conduit 36 to the press cylinder 6 prevents oil flowing to the cylinder 6 in this situation. The pressure drop over the valve 26 is always ten bars.

If now at time t0 (Fig. 5c) the pressure cycle is initiated by depressing the starting button 61, the valve 24 is closed by means of the timer 52. As a result, the pressure drop over the venturi 21 falls off, and the valve 25 closes. Thereafter, the pump pressure in the conduit 32 will increase, causing the pressure reduction valve 26 to open and the oil to flow to the press cylinder 6. In the segment (a) the cylinder pressure will increase slowly depending on the resistance of the rubber plate. The pressure transducer 28 measures this pressure and via the amplifier 55 (in Fig. 5a) feeds the signal to the electronic control circuit. By means of the potentiometer 41 the slope of the segment (a), and thus the pressure of the plunger fluid, is set as a function of the cylinder pressure. The pressure of the plunger fluid is limited during the whole pressure cycle by the setting of the potentiometer 40 (see dotted line in Fig. 5b). The control signal (desired value) fed in through the input 49 to the amplifier 56 is compared with the signal coming from the pressure transducer 29 of the plunger fluid pressure at the input 48 (actual value). The output signal of the amplifier chain 56, 60 then determines the setting of the flow control valve 23 and thereby the pressure of the plunger fluid which is built up with it. At a particular value of the plunger fluid pressure, which is set by the potentiometer 42, the segment (b) in Fig. 5b follows, in which the press cylinder pressure can increase while the matching value of the plunger fluid pressure is fixed. At a particular pressure of the press cylinder set by the potentiometer 43 the segment (c) in Fig. 5b will follow, in which the plunger fluid pressure is suddenly built up (here the connection between the potentiometer 42 and the input 49 of the amplifier 56 is interrupted by the output signal of the amplifier 56). This build-up of the plunger fluid pressure is ended at a particular desired pressure set by the potentiometer 44 according to segment (d), in which the pressure of the press cylinder is further increased. When the maximum pressure of the press cylinder (segment (e)) set by the potentiometer 45 is reached, the timer 52 is reset by means of the amplifier 57.

As a result of this, the valve 24 is opened at the end of this pressing cycle, so that the valve 25 also opens and the plunger oil is sucked back through the venturi 21. After an interval of two seconds set by the timer 53, the valve 27 is opened, so that the oil can flow back out of the cylinder 6 to the tank 31 just until the lowest piston position set by the potentiometer 46 is reached, after which the valve 27 closes again. At 50 a measurement signal, which feeds in the actual piston position to the amplifier 58, is given.

It goes without saying that, by setting the potentiometers 40 to 45, the diagram of Fig. 5b and the time diagram of Fig. 5c can be set in various ways in accordance with practice.

## Claims

1. Deep-forming press, provided with a fixed die and a flexible plunger, consisting of a rubber plate, the blank to be deformed being placed between fixed die and rubber plate, a press cylinder against the rubber plate with a central channel through which fluid can be admitted with regulated pressure under the rubber plate, and a hydraulic fluid circuit, where in a first phase the rubber is compressed by the press cylinder and the blank is forced through inward-directed friction forces into the die cavity, and in a second phase the blank is deformed by the plunger fluid pressure to the details of the die cavity, characterized in that for accurate regulation over the entire pressure range an electronic control circuit is provided for the hydraulic circuit, in which a pressure transducer is fitted in the fluid conduit to the press cylinder, and a pressure transducer and a flow regulation valve are fitted in the fluid conduit to the plunger, the electrical excitation of which is a function of the press cylinder pressure.

2. Deep-forming press according to Claim 1, in which the hydraulic circuit is provided with a pump, characterized in that the electronic control circuit is designed with a limit setting element in such a way that the plunger fluid pressure produced by the flow regulation valve is always lower than the pressure on the rubber plate, which means that during the pressing cycle a safe seal for the plunger fluid is ensured, and in that in the hydraulic circuit a venturi pump driven by the circulated fluid is provided, so that after the completion of the pressing cycle under the control of the electronic control circuit the plunger fluid is first sucked back and then the pressure is removed.

3. Deep-forming press according to Claim 1 or 2, characterized in that the press cylinder is provided on its pressure face with a cavity to take part of the rubber flowing away.

4. Deep-forming press according to Claim 1, characterized in that the electronic control circuit comprises a PID control.

5. Deep-forming press according to Claim 1, characterized in that the electronic control circuit is provided with setting elements for the electrical excitation of the flow regulation valve to control the the plunger fluid pressure during the pressure cycle, depending on the press cylinder pressure, according to a given pressure diagram.

0251416

# fig-1

# fig-3

Fig-2

0251416

2/4

## Fig-4

*Fig-5a*

*Fig-5b*

*Fig-5c*

4/4

0251416

**European Patent Office**

**EUROPEAN SEARCH REPORT**

Application number

EP 87 20 1245

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-2 462 262 (ATELIERS ET CHANTIERS DE BRETAGNE ACB) * Page 5; figures * | 1 | B 21 D 22/12 G 05 B 16/20 |
| Y | US-A-3 939 329 (GTE SYLVANIA INC.) * Whole document * | 1 | |
| A | US-A-3 910 087 (THE BOEING CO.) | | |
| A | US-A-2 605 731 (SCHULZE) | | |
| A | US-A-2 317 869 (WALTON) | | |

TECHNICAL FIELDS SEARCHED (Int Cl 4)

B 21 D
G 05 B

The present search report has been drawn up for all claims

| Place of search | Date of completion of the search | Examiner |
|---|---|---|
| THE HAGUE | 18-09-1987 | PEETERS L. |